# EUROPEAN PATENT SPECIFICATION

(11) **EP 2 105 071 B1**
(45) Date of publication and mention of the grant of the patent: **08.12.2010**
(21) Application number: 09004328.2
(22) Date of filing: 26.03.2009
(51) Int. Cl.: A47J 27/022, A47J 36/02

(54) **Induction heated cooking utensil and manufacturing method**
Induktionserhitzte Kochutensilien und Herstellungsverfahren
Ustensile de cuisine à chauffage par induction et procédé de fabrication

(30) Priority: 26.03.2008 CN 200820009006 U
(43) Date of publication of application: 30.09.2009
(73) Proprietor: Castey Dominguez, Ramon, 17003 Girona (ES)
(72) Inventor: Castey Dominguez, Ramon, 17003 Girona (ES)
(74) Representative: Gislon, Gabriele

(56) References cited:
- EP-A- 1 541 072
- FR-A- 2 739 998
- JP-A- 6 215 862
- JP-A- 2003 102 616
- KR-A- 20040 083 969

## Description

### Field of the invention

This invention relates to a cooking utensil, particularly a cooking container such as a saucepan, pan or pot, with an integrated bottom wall adapted to be heated by induction through an induction cooker.

The invention also refers to some steps of a manufacturing method of a referred cooking utensil.

### Technical background

Patent JP-A-06-215862 discloses a cooking utensil with a simple structure by integrating a magnetic metal plate on the reverse surface of a bottom plate of a container, providing a plurality of through-holes in the magnetic metal plate, and integrally moulding the metal plate so that the through-holes are filled with a nonmagnetic metal material of the container body.

On the other hand, Patent JP-A-2003 102616 discloses a cooking utensil having a main body and a magnetic metal plate attached to the back bottom surface of the main body. At the back bottom surface of the main body are provided a projecting annular wall and a plurality of projections inserted through respective through-holes in the plate at a height larger than the thickness of the metal plate. The annular projecting wall and the projections are then press-crushed against the metal plate so that both surfaces are tightly caulked. A drawback of this cooking utensil is that some deformed material of the annular projecting wall and the projections once crushed is superimposed on the plate around the entire outer periphery thereof and around the through-holes, so that the back bottom surface of the finished utensil is not flat because the exposed plate areas are recessed with respect to the main body areas.

EP1541072 of the present inventor provides a suitable attachment of a diffusion plate in the shape of a disc to the container by a riveting procedure of a plurality of frustoconical projections inserted through perforations of the disc. However it has been noticed that in some cases depending on the diameters or sizes of the cooking utensils, the union provided for some of the projections or lugs with the disc failed and/or the disc experiences some deformation. Another problem arises from the narrow tolerance as per the disclosed method between lugs and through holes that leads to the dragging of the material of the container when deforming it through a press.

A study of the problem has revealed that the union between the lugs and the through holes is in part dependent on the burrs on the edges of the through holes that causes a deformation of the projections, and it can have as a consequence that the union between the container and the disc is not entirely effective, leaving a space between lugs and holes that can cause a reduction of the cooking utensil efficiency.

The present invention provides a solution to the above mentioned problems thanks to a new design of the through holes, increasing of the tolerance between holes and lugs and by the use of projections or lugs, advantageously frustoconical, of different sizes and distributed in a particular way.

### Disclosure of the invention

This invention refers to a cooking utensil with a bottom adapted for induction heating of the type comprising a container made from a first material having a plurality of frustoconical lugs projecting from an outer surface of a bottom wall thereof, and a heat distributing or diffusion plate in the form of a disc made from a second ferromagnetic heat conducting material designed to be heated by induction, having a plurality of through holes formed therein, said disc having when in place integrated to the container, an inner surface and an outer surface and said lugs being inserted into said through holes and deformed at least in part against said disc. Each of said through holes of the disc has a burr collar that projects from the inner surface and preferably an enlarged portion adjacent to said outer surface. According to the invention said burr collars of the disc have a chosen predetermined slope that helps in the penetration into the material of the bottom wall of the container contributing to improve the union between both parts. Likewise, said enlarged portion allows the free ends of the lugs to be expanded on it and anchored when they are deformed, thus improving said union.

The invention also comprises a method to manufacture said cooking utensil that comprises the steps of inserting the lugs projected in the bottom of said container into holes formed in the disc by a punching process, and then deforming the lugs onto the outer face of the disc by a pressing process that takes place at a temperature within a range of 350-450 °C. The punching process forms the holes with a burr collar around each one protruding from an inner surface of the disc when in place and with an enlarged portion in each hole adjacent to an outer surface of the disc.

According to the invention and in order to increase and stabilise the union between disc and bottom wall of the container it is proposed to use lugs in the container and holes in the disc having different diameters and arranged according to a particular path with regard to the surface of the bottom of the utensil once finished.

### Brief description of the drawings

Other characteristics and advantages of the invention will become clear after reading the examples for implementing the invention which are described below with reference to the sheets of drawings, in which:
Fig. 1 is a high elevation view illustrating the bottom of a cooking container provided with a plurality of protruding lugs and a ferromagnetic disc provided with a corresponding number of holes in a position previous to the union of both elements, in order to obtain a cooking utensil according to the state of the art.
Fig.2 is a plan view of the bottom wall of a cooking utensil according to the invention that shows the use of lugs and holes of different sizes and with a particular distribution.
Fig. 3 and Fig. 4 show other alternative embodiments always using at least two different sizes of the lugs or through holes and two different distributions of these elements.
Fig. 5 is a cross section view showing two of the through holes where the burr collars and the enlarged portion can be appreciated.
Fig. 6 is an enlarged cross section of one through hole where the burr collars and the enlarged portion can be appreciated more accurately.

### Detailed description of an embodiment

This invention refers to a cooking utensil of the type comprising a container 7 made from a first material having a plurality of frustoconical lugs 9 projecting from an outer surface of a bottom wall 8 thereof, and a heat distributing or diffusion plate 10 in the form of a disc made from a second ferromagnetic heat conducting material having a plurality of through holes11 formed therein.

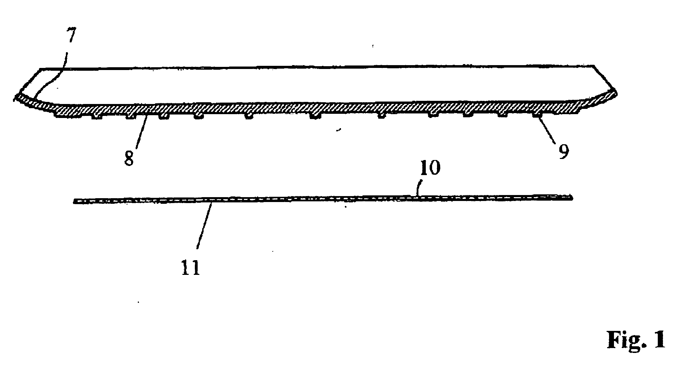

Fig. 1 show a cooking container comprising a container with a recessed bottom wall provided with a plurality of protruding projections or lugs that are frustoconical and a ferromagnetic disc, according to a standard structure disclosed in the cited EP1541072.

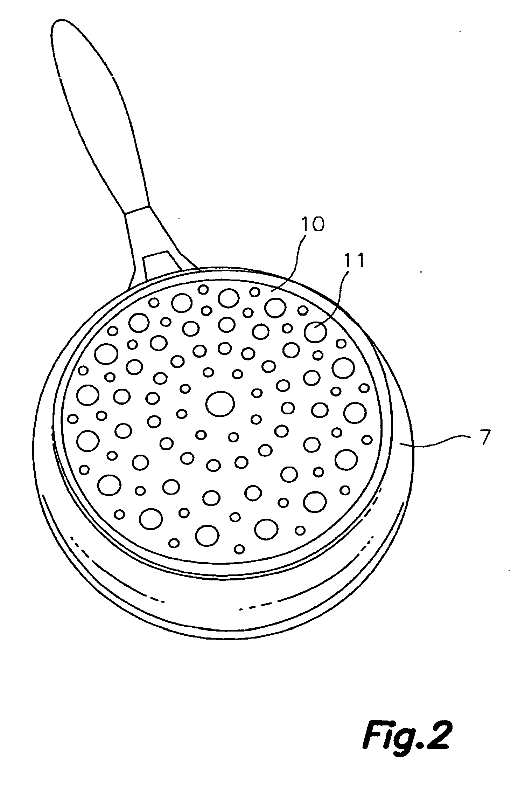

As it can be appreciated in Figs. 2 to 4, and according to the present invention, in order to obtain a secure union of the disc to the bottom wall of the container the through holes 11 will adopt different configurations and sizes in several embodiments, being these configuration and sizes of the different through holes adapted and in agreement to the configuration and size of the corresponding lugs of the container body. In the following description, only reference to holes is done.

Fig. 2 shows an embodiment including holes 11 of different sizes that comprise several radial rows of holes with an increasing cross section of each of the holes in a row from the centre to the periphery of the disc or a series of circumference rows of holes of same cross section, coaxial, and with increasing of the cross section of the holes in a row as said row approaches the periphery. In any of the cases around a crown area in proximity to the edge of the disc each of the trough holes at the end of a radial row is surrounded by four other holes of minor cross-section, thus providing in this area a distribution in a zigzag course or paths of the holes. In the embodiment of this Fig. 2 four different sizes of the through holes are used for the different rows, a fifth size for the groups of four holes surrounding holes adjacent the periphery as well as a bigger through hole in the centre.

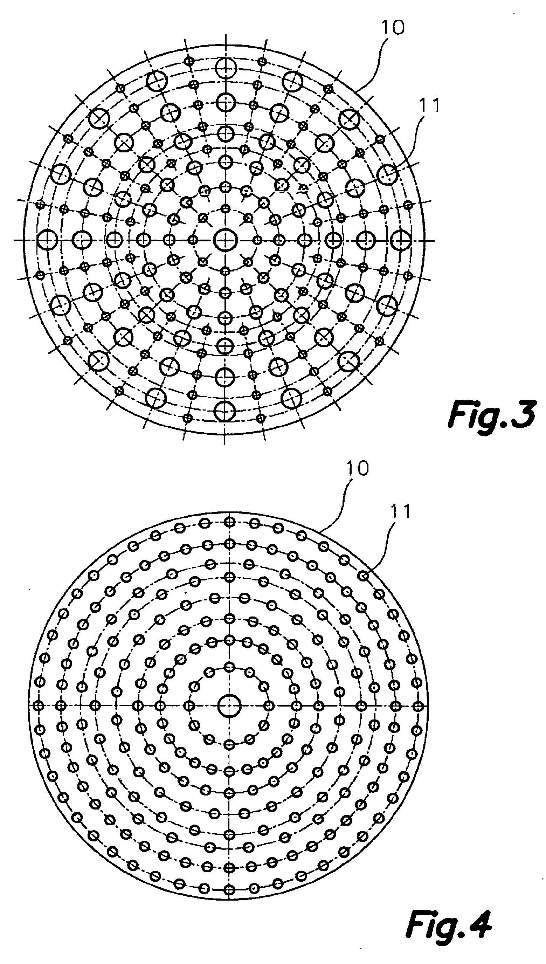

Fig. 3 shows a radial configuration of the rows of the holes with increasing cross-section of the holes at each row from the centre to the periphery and with one shorter row of holes of similar size and only extending along a crown area of the circle, inserted between each pair of the long rows, being said centre a hole of bigger size than the rest.

Fig. 4 shows a plurality of circumference rows of holes where all have similar size except the one in the centre that is bigger than the rest. Some of the rows and at least the ones located in the vicinity of the periphery are slightly shifted in rotation so that from the centre to the periphery the holes provide a zigzag path.

This zigzag path showed both in Fig.1 and Fig.4 provides a reinforcement of the peripheral area and so does the bigger size hole in the centre of the disc.

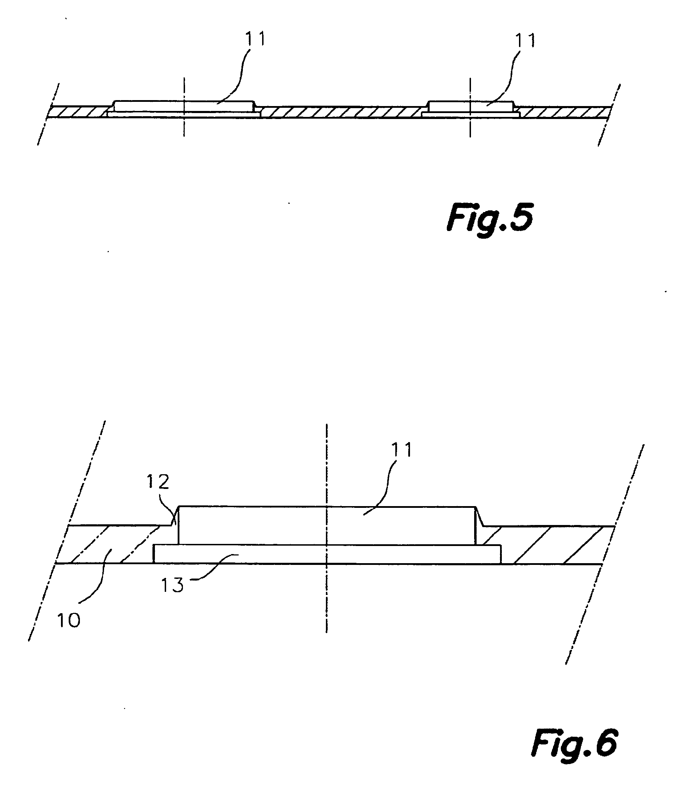

The cross section Fig. 5 illustrates two different sizes of the through holes. As it can be appreciated in Fig. 5 and 6, these holes 11 present at the inner part of the disc 10, a burr collar 12, which an external part that forms with the inner part of the through hole11, an angle comprised between 16° and 22°. Fig. 5 and 6 also shows the existence of an enlarged portion 13 providing a right step with the through hole at the outer surface of the disc 10, which extends along a 10% of the length of the through hole 11.

According to a preferred way of implementing the present invention the container is to be made from aluminium obtained by injection casting and said diffuser disc backed onto the outer surface of its bottom wall is made from stainless steel, with a percentage of niobium of 0,015%.

In an alternative embodiment the cooking utensil further includes a plate of Cu having a plurality of through holes prepared to receive said lugs inserted therethrough, placed between said bottom, where it remains superimposed, and said heat diffusion plate 10.

## Claims

1. A cooking utensil with a bottom adapted for induction heating of the type comprising a container (7) made from a first material having a plurality of frustoconical lugs (9) projecting from an outer surface of a bottom wall (8) thereof, and a heat distributing or diffusion plate (10) in the form of a disc made from a second ferromagnetic heat conducting material having a plurality of through holes (11) formed therein, said disc having when in place superimposed on said bottom wall (8), an inner surface and an outer surface, said lugs (9) being inserted into said holes (11) and deformed at least in part against said disc **characterized in that** each of said through holes (11) of said disc (10) has a burr collar (12) protruding from said inner surface and an enlarged section (13) adjacent to said outer surface.

2. A cooking utensil according to claim 1 **characterized in that** an external part of said burr collar (12) forms with the inner part of the through hole (11) an angle comprised between 16° and 22°.

3. A cooking utensil according to claim 1 or 2, **characterized in that** said enlarged section (13) provides a right step with the through hole (11).

4. A cooking utensil according to any of the preceding claims, **characterized in that** said ferromagnetic material of the disc (10) contains niobium.

5. A cooking utensil according to claim 5, **characterized in that** the percentage of niobium is of 0,015%.

6. A cooking utensil according to any of the preceding claims, **characterized in that** said disc (10) comprises one of said through holes (11) of bigger size than the others on its central part, and the container (7) has a lug of bigger size than the others on its central part, the size of the bigger hole being according to the size of the bigger lug.

7. A cooking utensil according to any of the preceding claims, **characterized in that** said through holes (11) and said lugs (9) have different sizes, the size of the through holes (11) being according to the size of the corresponding lugs (9).

8. A cooking utensil according to claim 7, **characterized in that** it comprises several radial rows of lugs-holes (9, 11) of different length with an increasing cross section of each of the lugs-holes (9, 11) in a row from the centre to the periphery of the disc (10) and **in that** in a crown area adjacent the edge of the disc (10) each of the though holes (11) is surrounded by four other holes of minor cross section.

9. A cooking utensil according to claim 7, **characterized in that** it comprises several radial rows of lugs-holes (9, 11) with increasing cross-section of the lugs-holes (9, 11) from the centre to the periphery and with one shorter row of holes (11) of similar size between each pair of long rows.

10. A cooking utensil according to claim 7, **characterized in that** it comprises several circumference rows of lugs-holes (9, 11) where all have a similar size except the one in the centre that is bigger, and **in that** some of the rows are slightly shifted in rotation.

11. A cooking utensil according to any of the claims 8-10, **characterized in that** some of the rows or groups of lug-holes (9, 11) are distributed in a part of the outer surface of the bottom wall (8) of the utensil in a zigzag path.

12. A cooking utensil according to claim 11, **characterized in that** said part where the groups of lug-holes (9, 11) are distributed in zigzag is a portion adjacent to the periphery of the bottom wall (8) of the utensil.

13. A cooking utensil according to any of the previous claims **characterized in that** further including a plate of Cu having a plurality of through holes (11) prepared to receive said lugs (9) inserted therethrough, placed between said bottom and said heat diffusion plate (10).

14. A method to manufacture a cooking utensil with a bottom adapted for induction heating comprising a container (7) made from a first material and a heat distributing or diffusion plate (10) in the form of a disc made from a second ferromagnetic heat conducting material integrated on the outer face of a bottom wall (8) of said container (7), the method comprising the steps of inserting lugs (9) projected in the bottom of container (7) into holes (11) formed in the disc (10), said holes (11) being formed by a punching process, and deforming the lugs (9) onto the outer face of the disc (10) by a pressing process, **characterized in that** said pressing process is carried out at a temperature within a range of 350-450 °C and **in that** said punching process comprises forming a burr collar (12) around each hole protruding from an inner surface of the disc (10) and an enlarged section (13) in each hole (11) adjacent to an outer surface of the disc (10).

## Patentansprüche

1. Kochutensil mit einem Boden, das zur Induktionserwärmung angepasst ist, derart umfassend einen Behälter (7) aus einem ersten Material, der eine Vielzahl an kegelstumpfförmigen Ansätzen (9) hat, die von einer Außenfläche einer Bodenwand (8) desselbigen vorstehen, und eine Wärmeverteil- oder diffusionsplatte (10) in Form einer Scheibe aus einem zweiten, ferromagnetischen, wärmeleitenden Material, die eine Vielzahl an darin gebildeten Durchgangsbohrungen (11) hat, wobei die genannte Scheibe, wenn sie über die genannte Bodenwand (8) an ihrem Ort überlagert ist, eine Innenfläche und eine Außenfläche hat, wobei die genannten Ansätze (9) in die genannten Bohrungen (11) eingesetzt und zumindest teilweise gegen die genannte Scheibe verformt sind, **dadurch gekennzeichnet ist, dass** jede der genannten Durchgangsbohrungen (11) der genannten Scheibe (10) einen Bohrkragen (12), der von der genannten Innenfläche vorsteht, und einen vergrößerten, der genannten Außenfläche benachbarten Abschnitt (13) hat.

2. Kochutensil nach Anspruch 1, **dadurch gekennzeichnet, dass** ein äußerer Teil des genannten Bohrkragens (12) mit dem inneren Teil der Durchgangsbohrung (11) einen Winkel zwischen 16° und 22° bildet.

3. Kochutensil nach Anspruch 1 oder 2, **dadurch gekennzeichnet, dass** der genannte vergrößerte Abschnitt (13) eine rechtwinklige Stufe mit der Durchgangsbohrung (11) bildet.

4. Kochutensil nach einem der vorherigen Ansprüche, **dadurch gekennzeichnet, dass** das genannte ferromagnetische Material der Scheibe (10) Niobium enthält.

5. Kochutensil nach Anspruch 5, **dadurch gekennzeichnet, dass** der prozentuale Anteil des Niobiums 0,015% beträgt.

6. Kochutensil nach einem der vorherigen Ansprüche, **dadurch gekennzeichnet, dass** die genannte Scheibe (10) auf ihrem mittleren Teil eine der genannten Durchgangsbohrungen (11) umfasst, die größer als die anderen ist, und der Behälter (7) auf seinem mittleren Teil einen Ansatz hat, der größer als die anderen ist, wobei die Größe der größeren Bohrung der Größe des größeren Ansatzes entspricht.

7. Kochutensil nach einem der vorherigen Ansprüche, **dadurch gekennzeichnet, dass** die genannten Durchgangsbohrungen (11) und die genannten Ansätze (9) verschiedene Größen haben, wobei die Größe der Durchgangsbohrungen (11) der Größe der entsprechenden Ansätze (9) entspricht.

8. Kochutensil nach Anspruch 7, **dadurch gekennzeichnet, dass** es mehrere radiale Reihen von Ansätzen-Bohrungen (9, 11) verschiedener Länge mit einem sich vergrößernden Querschnitt jeder der Ansätze-Bohrungen (9, 11) in einer Reihe vom Zentrum bis zum Umfang der Scheibe (10) umfasst, und dass in einem an den Rand der Scheibe (10) angrenzenden Kranzbereich jede der Durchgangsbohrungen (11) von vier weiteren Bohrungen mit einem geringeren Querschnitt umgeben ist.

9. Kochutensil nach Anspruch 7, **dadurch gekennzeichnet, dass** es mehrere radiale Reihen von Ansätzen-Bohrungen (9, 11) mit einem sich vergrößernden Querschnitt der Ansätze-Bohrungen (9, 11) vom Zentrum bis zum Umfang umfasst, und mit einer kürzeren Reihe an Bohrungen (11) ähnlicher Größe zwischen jedem Paar an langen Reihen.

10. Kochutensil nach Anspruch 7, **dadurch gekennzeichnet, dass** es mehrere Umfangsreihen von Ansätzen-Bohrungen (9, 11) umfasst, von denen alle eine ähnliche Größe haben mit Ausnahme eines/einer einzigen im Zentrum, der größer ist, und dass einige der Reihen leicht drehversetzt sind.

11. Kochutensil nach einem der Ansprüche 8-10, **dadurch gekennzeichnet, dass** einige der Reihen oder Gruppen von Ansätzen-Bohrungen (9, 11) in einem Teil der Außenfläche der Bodenwand (8) des Utensil in einem Zick-Zack-Weg verteilt sind.

12. Kochutensil nach Anspruch 11, **dadurch gekennzeichnet, dass** der genannte Teil, wo die Gruppen von Ansätzen-Bohrungen (9, 11) zickzackförmig verteilt sind, ein an den Umfang der Bodenwand (8) des Utensil angrenzender Teil ist.

13. Kochutensil nach einem der vorherigen Ansprüche, **dadurch gekennzeichnet, dass** es weiterhin eine Cu-Platte beinhaltet, die eine Vielzahl an Durchgangsbohrungen (11) hat, die zur Aufnahme der genannten Ansätze (9), die in sie eingesetzt und zwischen dem genannten Boden und der genannten Wärmediffusionsplatte (10) platziert werden, präpariert sind.

14. Verfahren zur Herstellung eines Kochutensils mit einem Boden, das zur Induktionserwärmung angepasst ist, umfassend einen Behälter (7) aus einem ersten Material und eine Wärmeverteil- oder diffusionsplatte (10) in Form einer Scheibe aus einem zweiten, ferromagnetischen, wärmeleitenden Material, das in der Außenseite einer Bodenwand (8) des genannten Behälters (7) integriert ist, wobei das Verfahren folgende Schritte umfasst: Einsetzen von in den Boden des Behälters (7) vorstehenden Ansätzen (9) in in der Scheibe (10) gebildete Bohrungen (11), wobei die genannten Bohrungen (11) durch einen Stanzvorgang gebildet werden, und Verformen der Ansätze (9) auf die Außenseite der Scheibe (10) durch einen Pressvorgang, **dadurch gekennzeichnet, dass** der genannte Pressvorgang bei einer Temperatur in einem Bereich innerhalb von 350-450 °C durchgeführt wird und dass der genannte Stanzvorgang die Bildung eines Bohrkragens (12) um jede Bohrung herum umfasst, der von einer Innenfläche der Scheibe (10) vorsteht, und einen vergrößerten Abschnitt (13) in jeder Bohrung (11), der an eine Außenfläche der Scheibe (10) angrenzt.

## Revendications

1. Un ustensile de cuisine ayant un fond adapté pour la chaleur par induction du genre comportant un récipient (7) fait en un premier matériau ayant une pluralité de pattes tronconiques (9) se projetant d'une surface extérieure de sa paroi de fond (8) et un plaque de distribution ou de diffusion de la chaleur (10) ayant la forme d'un disque fait en un deuxième matériau conducteur de chaleur ferromagnétique ayant une pluralité de trous traversants (11) qui y sont formés, ce disque ayant , lorsqu'il est en place superposé sur cette paroi de fond (8), une surface intérieure et une surface extérieure , ces pattes (9) étant engagées dans ce trous (11) et déformées au moins en partie contre ce disque, **caractérisé en ce que** chacun de ces trous traversants (11) de ce disque (10) possède un collier fraisé (12) se projetant de cette surface intérieure et une section agrandie (13) adjacente à cette surface extérieure.

2. Un ustensile de cuisine conformément à la revendication 1 **caractérisé en ce qu'**une partie externe de ce collier fraisé (12) forme avec la partie intérieure du trou traversant (11) un angle compris entre 16° et 22°.

3. Un ustensile de cuisine conformément à la revendication 1 ou 2, **caractérisé en ce que** cette section agrandie (13) offre un gradin droit avec le trou traversant (11).

4. Un ustensile de cuisine conformément à une quelconque des revendications précédentes, **caractérisé en ce que** ce matériau ferromagnétique du disque contient du niobium.

5. Un ustensile de cuisine conformément à la revendication 5, **caractérisé en ce que** le pourcentage de niobium est de 0,015%.

6. Un ustensile de cuisine conformément à une quelconque des revendications précédentes, **caractérisé en ce que** ce disque (10) comporte un de ces trous traversants (11) ayant une plus grande taille que les autres à sa partie centrale et le récipient (7) possède une patte ayant une plus grande taille que les autres à sa partie centrale, la taille du trou le plus grand se conformant à la taille de la patte la plus grande.

7. Un ustensile de cuisine conformément à une quelconque des revendications précédentes, **caractérisé en ce que** ces trous traversants (11) et ces pattes (9) ont des tailles différentes, la taille des trous traversants (11) se conformant à la taille des pattes correspondantes (9).

8. Un ustensile de cuisine conformément à la revendication 7, **caractérisé en ce qu'**il comporte plusieurs rangées radiales de pattes-trous (9, 11) ayant une longueur différente avec une section transversale croissante de chacun des pattes-trous (9, 11) dans une rangée depuis le centre jusqu'à la périphérie du disque (10) et **en ce que** dans une région sphérique adjacente au bord du disque (10) chacun des trous traversants (11) est entouré de quatre autres trous ayant une section transversale plus petite.

9. Un ustensile de cuisine conformément à la revendication 7, **caractérisé en ce qu'**il comporte plusieurs rangées radiales de pattes-trous (9, 11) ayant une section transversale croissante des pattes-trous (9,11) depuis le centre jusqu'à la périphérie et avec une rangée plus courte de trous (11) ayant une taille semblable entre chaque paire de rangées longues.

10. Un ustensile de cuisine conformément à la revendication 7, **caractérisé en ce qu'**il comporte plusieurs rangées de circonférences de pattes-trous (9,11) où tous ont une taille semblable sauf une au centre qui est plus grande et **en ce que** certaines rangées sont légèrement décalées en rotation.

11. Un ustensile de cuisine conformément à une quelconque des revendications 8-10, **caractérisé en ce que** certaines rangées ou certains groupes de pattes-trous (9, 11) sont distribués sur une partie de la surface extérieure de la paroi de fond (8) de l'ustensile en une trajectoire en zigzag.

12. Un ustensile de cuisine conformément à la revendication 11, **caractérisé en ce que** cette partie où les groupes de patte-trous (9-11) sont distribués en zigzag est une portion adjacente à la périphérie de la paroi de fond (8) de l'ustensile.

13. Un ustensile de cuisine conformément à une quelconque des revendications précédentes **caractérisé en ce qu'**il comporte en plus une plaque en Cu ayant une pluralité de trous traversants (11) aménagés pour recevoir ces pattes (7) qui y sont engagées, placés entre ce fond et cette plaque de diffusion de la chaleur (10).

14. Une méthode pour fabriquer un ustensile de cuisine ayant un fond adapté pour le chauffage par induction comportant un récipient (7) fait en un premier matériau et une plaque de distribution ou de diffusion de la chaleur (10) ayant la forme d'un disque fait en un deuxième matériau conducteur de chaleur ferromagnétique intégré sur la surface extérieure d'une paroi de fond (8) de ce récipient (7), la méthode comportant les étapes d'engagement des pattes (9) projetées dans le fond du récipient (7) dans des trous (11) formés dans le disque (10), ces trous (11) étant formés par un processus de perforation et en déformant les pattes (9) sur la surface extérieure du disque (10) au moyen d'un processus de pression, **caractérisé en ce que** ce processus de pression est effectué à une température d'entre 350-450°C et **en ce que** ce processus de pression comporte la formation d'un collier fraisé (12) autour de chaque trou se projetant depuis une surface intérieure du disque (10) et une section agrandie (13) de chaque trou (11) adjacente à une surface extérieure du disque (10).
